# EUROPEAN PATENT SPECIFICATION

(11) **EP 3 812 498 B1**
(45) Date of publication and mention of the grant of the patent: **06.12.2023**
(21) Application number: 20202897.3
(22) Date of filing: 20.10.2020
(51) Int. Cl.: D06B 23/20

(54) **GROUP FOR PREPARING A COMPOUND FOR DYEING MANUFACTURED ITEMS, SUCH AS FOR EXAMPLE CLOTHING ARTICLES, AS WELL AS A PLANT FOR DYEING AND A METHOD FOR PREPARING A COMPOUND FOR DYEING MANUFACTURED ITEMS**
GRUPPE ZUR HERSTELLUNG EINER VERBINDUNG ZUM FÄRBEN VON HERGESTELLTEN ARTIKELN, WIE ETWA ZUM BEISPIEL KLEIDUNGSARTIKEL, SOWIE ANLAGE ZUM FÄRBEN UND VERFAHREN ZUR HERSTELLUNG EINER VERBINDUNG ZUM FÄRBEN VON HERGESTELLTEN ARTIKELN
GROUPE POUR LA PRÉPARATION D'UN COMPOSÉ POUR LA TEINTURE D'ARTICLES MANUFACTURÉS, COMME PAR EXEMPLE DES ARTICLES D'HABILLEMENT, AINSI QU'UNE INSTALLATION DE TEINTURE ET UN PROCÉDÉ POUR LA PRÉPARATION D'UN COMPOSÉ POUR LA TEINTURE D'ARTICLES MANUFACTURÉS

(30) Priority: 21.10.2019 IT 201900019427
(43) Date of publication of application: 28.04.2021
(73) Proprietor: Tonello S.r.l., 36030 Sarcedo (Vicenza) (IT)
(72) Inventor: FALAGUASTA, Massimo, 36030 Sarcedo (Vicenza) (IT); TONELLO, Alice, 36030 Sarcedo (Vicenza) (IT)
(74) Representative: Feltrinelli, Secondo Andrea

(56) References cited:
- US-A1- 2011 271 463
- US-A1- 2018 282 944

## Description

### TECHNICAL FIELD OF THE INVENTION

The present invention refers to a group for preparing a compound for dyeing manufactured items, such as for example clothing articles, as well as a plant for dyeing and a method for preparing a compound for dyeing manufactured items.

### THE PRIOR ART

Many apparatuses have been proposed for dyeing items of clothing, such as trousers, sweaters, jumpers, jackets, etc.

Such apparatuses usually employ specific substances for the dyeing of items which are of chemical extraction.

US2018282944A1 and US2011271463A1 describe solutions according to the prior art.

In particular, document US2018282944 A1 discloses an apparatus for processing textile fibres and preparing a compound for dyeing textile products, whereby said apparatus comprises at least one tank for containing liquid carbon dioxide and a natural dye extraction kettle adapted to contain a colour release element comprising natural plant dyes, and whereby said extraction kettle is in fluid communication with said at least one tank such that the liquid carbon dioxide can be conveyed within said natural dye extraction kettle, thereby being dyed by the natural dye substance.

### OBJECTS OF THE INVENTION

An object of the present invention is to provide a new group for preparing a compound for dyeing manufactured items.

Another object of the present invention is to provide a group as above said which is an alternative to traditional processes which use synthetic chemicals.

Another object of the present invention is to provide a group as indicated above which ensures that the dyeing process is safe for operators.

Another object of the present invention is to provide a group for preparing a compound for dyeing manufactured items which is able of carrying out an ecological process.

According to an aspect of the invention, a group according to claim 1 is provided.

The dependent claims refer to preferred and advantageous embodiments of the invention.

### BRIEF DESCRIPTION OF THE DRAWING

Other features and advantages of the invention will be more apparent from the description of an embodiment of a group, illustrated by way of example in the accompanying drawings, in which:

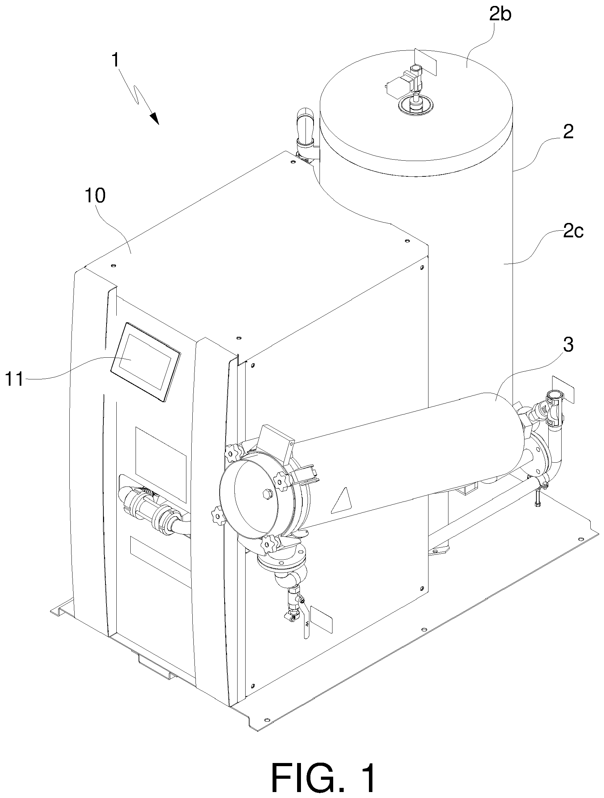

- figure 1 is a perspective view slightly from above of a group according to the present invention,
- figure 2 is a side view of the group of figure 1 with parts removed and only a visible portion of the liquid path in the group itself,
- figure 3 is a view of a detail of the group of figure 1 with arrows indicating outlets or discharges of the liquid from the group,
- figure 4 is a sectional view of a filter for a group of figure 1;

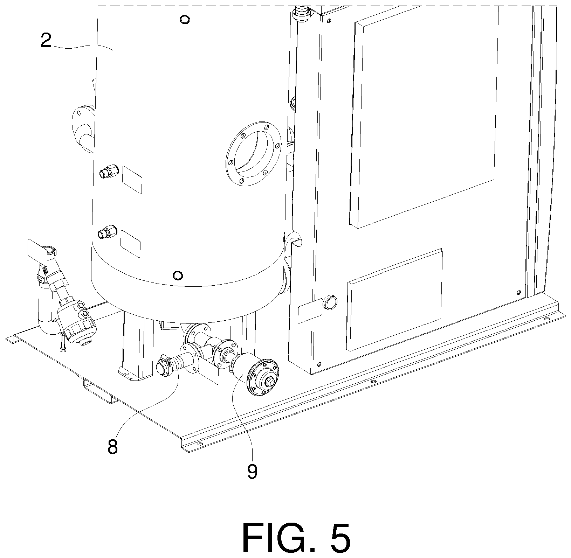

- figure 5 is a view of a detail of the group of figure 1 with arrows indicating an emptying opening of the tank of the group.

In the accompanying drawings identical parts or components are indicated by the same reference numbers.

### EMBODIMENTS OF THE INVENTION

With reference to the attached figures, a group 1 for preparing a compound for dyeing manufactured items, such as for example items of clothing, such as trousers, sweaters, jumpers, jackets, etc. has been illustrated, comprising at least a tank 2 for containing a more or less dense liquid, especially water.

The water in the containment tank can be, for example, softened or non-softened water.

According to the non-limiting embodiment illustrated in the figures, the tank 2 may for example have a base 2a, a top 2b and a side wall, if desired cylindrical 2c extending between the bases. Moreover, the tank 2 can be arranged with a substantially vertical arrangement or arrangement inclined with respect to the vertical and to the horizontal, that is to say with the main development or symmetry axis of the side wall substantially vertical or inclined with respect to the vertical and to the horizontal.

The group 1 then comprises at least one one dye component or filter 3 provided with a basket in fluid communication, if desired by means of suitable ducts, with the tank 2, so that the liquid (initially in the tank 2 or in a containment and non-filtering part of the same) can be conveyed within or through the filter 3 and through the natural dye substance FS so that the liquid is dyed by the natural dye substance FS.

The filter 3 includes a containment means suitable to contain a color release element comprising at least one natural dye substance FS. The natural dye substance FS can include, for example, roots, berries, fruits, shells and/or barks or parts in general of flowers or plants in general, for example shells, peels, berries, barks, roots, grass, mushrooms and/or parts of mushrooms or animals, such as dead and/or dried animals and/or animal or mineral extracts or any other natural substance that releases color, if desired in the form of flakes, pieces or even powder.

As it will be ascertained, the natural dye substance FS releases color to the fluid, so it does not purify or allow only certain components of the fluid to pass through. The expressions filter and color release element must therefore be interpreted in the light of this and the other definitions provided for the respective component.

The filter 3 can have a configuration with a casing 3a delimiting a zone CZ for containing one or more natural dye substances FS.

This filter 3 can have longitudinal symmetry axis x-x for example inclined with respect to the vertical and the horizontal or even vertical. As regards the possible inclination of the filter 3, the respective longitudinal axis of symmetry x-x can define an acute angle with the horizontal between about 10° and about 40°, 50°, 60° or 70°.

More particularly, the filter 3 can be arranged with an opening or inlet end 3b at a level higher than the respective opening or outlet end 3c, so that the liquid, or rather the water, passes through the filter from top to bottom, if desired according to a path in an inclined direction with respect to the vertical. If desired, the outlet opening 3c is at a level slightly higher than the bottom of the tank 2.

The filter 3 can then comprise containment means 3d of the natural dye substances FS, for example grids, membranes or the like intended to delimit the part of the containment area CZ in which the natural dye substances FS are kept and to prevent the latter from being drag away or out of their respective seat. Clearly, the containment means 3d do not prevent the passage of the liquid.

The natural dye substances FS can be flakes, pieces or loose or untied powders within the containment area CZ, but confined by the containment means 3d.

Therefore, these substances FS define between them a percolation or passage path for the liquid.

Subject-matter of the present invention is also a filter as indicated above for a group for preparing a compound for dyeing manufactured items or, better, for a plant for dyeing manufactures items, such as items of clothing.

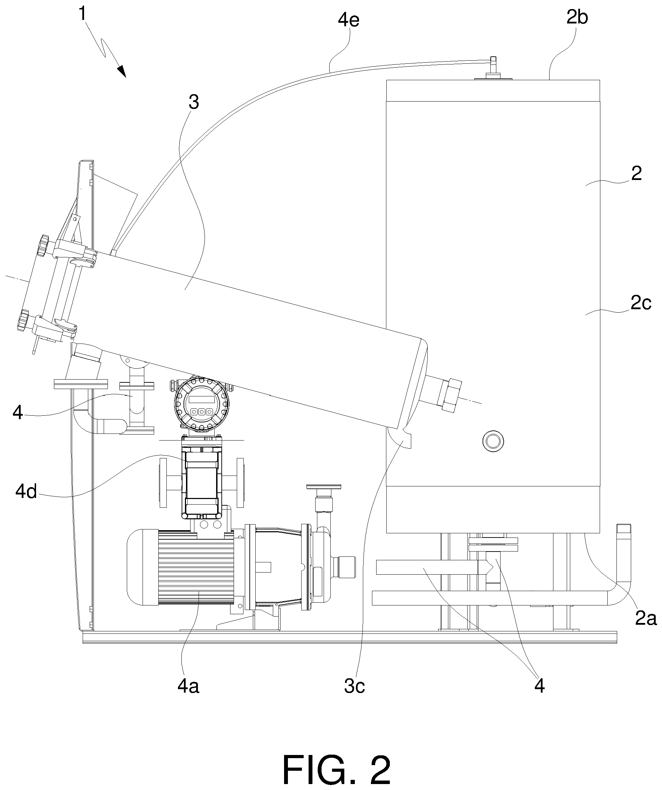

Moreover, a connection tube or bypass 4e (visible in figure 2) can be provided between the filter 3 and the tank 2, in particular between an upper part of the filter 3 and the tank 2 or a storage tank or the conveyance circuit 4. This tube makes it possible to completely fill the filter with liquid (and therefore to completely wet the dye substances contained within it) favouring the venting of excess air from the filter 3 to the tank 2 or to the storage tank or to the conveyance circuit 4.

The group 1 is then provided with a conveyance circuit 4 of the liquid taken from the tank 2 into the filter 3 and through the natural dye substance FS so as to dye the liquid with the natural dye substance FS. Clearly, the percolation or passage path for the liquid constitutes a section of the conveyance circuit 4.

There are also preferably provided thrust or suction means, such as a pump 4a, suitably operated, designed to push or in any case force the liquid along the conveyance circuit 4. The pump 4a can be provided for example at the bottom of the group 1.

The conveyance circuit 4 can extend starting from the bottom of the tank 2 and then have horizontal and/or oblique and/or vertical sections (with suitable connections) until it reaches a predetermined level at which the inlet opening 3b of the filter 3 is provided.

If desired, heating means are provided, for example a coil or electric resistance (not shown in the figures), which are mounted or in any case act in the tank 2 to heat the liquid, such as water, in particular to heat the liquid before it is fed to the filter 3 to thus promote the absorption by the liquid of the color released by the natural dye substances FS during the filtering or passage of the liquid through them. Naturally, in this case, the group also comprises means for actuating the heating means.

The heating means can, in addition or alternative to what has now been indicated, be provided around or within the conveyance circuit 4 and/or in the filter 3. In the latter case, clearly, the heating means would heat the liquid during the feeding of the liquid to filter 3.

The heating means are for example designed to heat the liquid to a temperature between 40 and 98°C.

Advantageously, the conveyance circuit 4 departs from the tank 2, passes through the filter 3 and flows back into the tank 2 or into a storage container, so that a closed or non-closed circuit is generated during which the liquid absorbs a color from the natural dye substance FS contained in the filter 3.

According to the non-limiting embodiment shown in the figures, the conveyance circuit 4 is a closed circuit that departs from the tank 2, for example from the bottom of the same (from which the liquid is drawn) and also returns or ends in the tank 2 by means of a terminal duct 4c of the circuit 4, for example at a level proximal to the bottom, but slightly above the outlet from the tank of the conveyance circuit 4.

At least one discharge duct or outflow 5a, 5b of the treated or dyed liquid in the filter 3 towards a washing machine or dyeing machine is also provided.

If desired, two or more discharge ducts or outflows 5a, 5b are provided, so as each of the latter can serve two or more washing machines.

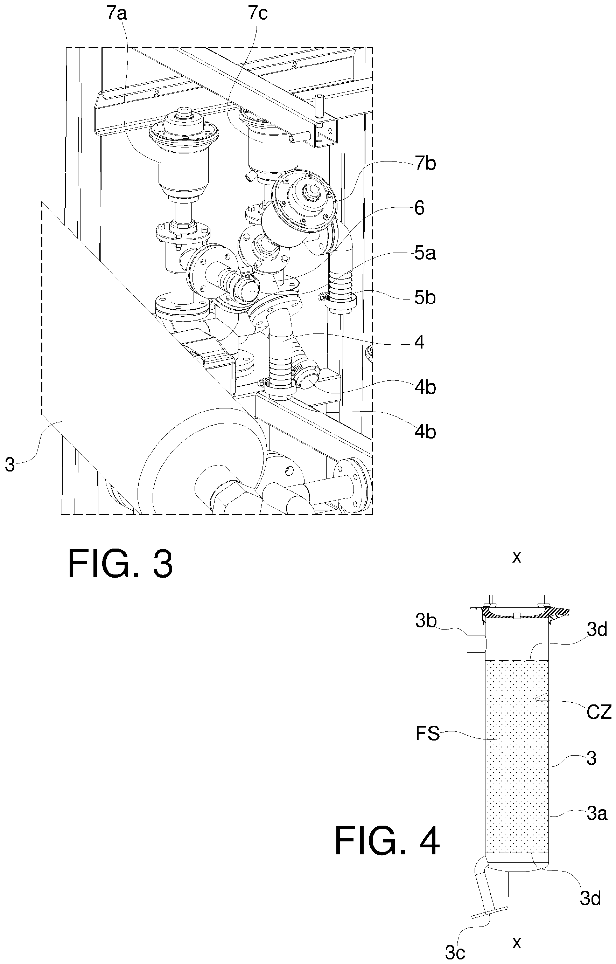

In this regard, the discharge ducts 5a, 5b (see figure 3) can constitute branching arms of the conveying circuit 4.

In this respect, the conveyance circuit 4 can comprise a fitting 6 with two or more outlets, each intercepted by a respective shut-off valve 7a, 7b, 7c, a section 4b (in figure 3 shown only in part) being mounted in an outlet of the conveyance circuit 4, for example upstream of the filter 3, while a respective discharge duct 5a, 5b is mounted in the other outlet or other outlets. With such a structure it is possible to selectively feed (by means of appropriate control of the valves 7a, 7b, 7c) the liquid to the filter 3 or to one or both of the discharge ducts 5a, 5b and therefore to a respective washing machine or utility.

Clearly, the discharge ducts 5a, 5b could also depart directly from the tank 2 or from a storage container for the final compound to dye manufactured items, without therefore intercepting the conveyance circuit 4.

Of course, the conveyance circuit 4 could also open directly to the outside of the group or into an exhaust duct, without therefore providing a return section to the tank 3 or a transmission section to a storage container.

Moreover, the group 1 can also be equipped with an emptying duct 8 of the tank 2, which starts from a suitable emptying opening delimited by the tank 2, if desired on the bottom of the same and it is intercepted by a suitable opening/closing valve 9.

The group 1 can also comprise a casing 10 for delimiting or hiding components of the group.

In this case, the filter 3 can be supported by a wall of the casing 10, in particular on the side of the latter and/or by the tank 1.

If desired, the filter 3 can also be provided with an anti-scald protection (not visible in the images), for reasons of safety and protection for the operator.

The casing 10 can then support a screen or control panel 11 by an operator.

Clearly, the control of the valves (if electronic), the pump and any other possible components of the group can be delegated to a control unit or PLC of group 1.

A group according to the present invention can also include an electronic control unit or microprocessor to allow, for example, to manage automatically, by controlling temperatures, dye release times, quantity of liquid to be introduced into the machine as well as to save recipes for future treatment replicates.

In this case, through the central electronic unit it is possible to control, save and define the process parameters as well as the reproducibility of pre-set recipes.

The group can then also comprise a flow meter 4d, which makes it possible to monitor the dosing flow rate of the liquid. This component can be in electrical communication with an electronic control unit.

A colorimeter or sensor for detecting the color in the liquid treated in the filter can then be provided in the group, which is responsible for controlling the level of dye absorbed and consequently informing an electronic control unit of the group.

Clearly, the group 1 and more particularly the tank 2 or also the conveyance circuit 4 can then have an opening for the introduction of liquid, i.e. water, which would serve for the initial filling of the tank or for the rinsing phase or to dilute the compound, if it is too concentrated in dye. These steps could of course be managed by an electronic control unit or even by an operator as a function, for example with information or lights visible for example on a control panel.

Moreover, even if they are not described in general, the group contains special manual and/or automatic valves with means for controlling them, as well as, where necessary, means of motorization of the components and appropriate sensors, if desired in electronic communication with the electronic unit.

In accordance with the present invention there is also provided a dyeing plant comprising a group 1 as well as at least one apparatus or washing machine or dyeing machine (not shown in the figures) for dyeing of manufactured items, such as clothing articles, which apparatus is in fluid communication with the tank 2 or with a container or with the filter 3 so as to receive from it the compound for dyeing manufactures items obtained by filtering the liquid taken from the tank 2 in the filter 3.

More specifically, the or each washing machine or dyeing machine is placed in fluid communication or served by a respective discharge duct 5a, 5b. If two or more discharge ducts 5a, 5b are provided, then the plant comprises two or more washing machines each connected and in communication with a respective discharge duct 5a, 5b so as to be able to receive the compound for dyeing only from the latter, and thus it is possible to fed two washing machines at the same time or not by means of the same group.

The present invention also relates to a method of preparing a compound for dyeing manufactured items with a group 1, which involves conveying the liquid into the filter 3 and through the natural dye substance FS so that the liquid absorbs a coloring from the natural dye substance FS contained in the filter 3.

If desired, the method provides a heating step, if desired at a temperature between 40 and 98°C, for example for a time between 5' and 120', of the liquid (in the tank 2, in the circuit 4 or in the filter 3), owing to an action of the heating means, before or during the conveyance of the liquid into the filter 3, so as to increase the action or absorption capacity by the liquid of the coloring released by the natural dye substance FS.

Advantageously, a treatment method with a plant according to the present invention can also provide, after having conveyed the liquid into the filter 3 and through the natural dye substance FS, to perform the following steps:
- return the filtered liquid to tank 2 or send it to a storage container, and, after a certain storage period,
- transmit the compound to dye into the washing machine or dyeing machine, where this compound will dye the items of clothing.

Clearly, after the liquid has been filtered and therefore after the liquid has absorbed the color released by the natural dye substances FS, the dyeing compound can be directly sent to a washing machine or dyeing machine, without therefore being stored in the tank or in a storage container.

Changes and variants of the invention are possible within the defined by the claims.

Thus, for example, the filter could also constitute a final section, preferably lower, of the tank or this filter could be placed immediately downstream, if desired below, the tank, so that the conveyance circuit 4, at least between tank and filter, would not be planned or in any case would consist of a (more or less short) duct.

## Claims

1. Group for preparing a compound for dyeing manufactured items, such as for example clothing articles, comprising at least one tank (2) for containing water, at least one filter (3) including a containment means adapted to contain a color release element comprising at least one natural dye substance (FS) in fluid communication with said at least one tank (2) such that said water in said at least one tank (2) can be conveyed within or through said at least one filter (3) and through said at least one natural dye substance (FS) in a manner such that said water is dyed by said at least one natural dye substance (FS),
said apparatus comprising at least one circuit (4) for conveying said water, drawn from said at least one tank (2), into said at least one filter (3) and through said at least one natural dye substance (FS),
said apparatus further comprising heating means mounted or in any case operating in said at least one tank (2) around or within said conveyance circuit (4) and/or around or within said at least one filter (3) in order to heat the water before the same is fed to said at least one filter (3) or during such feeding in order to facilitate the absorption by the water of color released by said at least one natural dye substance (FS) during the filtering action or passage of the water through the natural dye substance (FS).

2. Group according to claim 1, wherein said heating means are set to heat said water at a temperature between 40 and 98°C.

3. Group according to claim 1 or 2, wherein said heating means comprise a coil or an electric resistance.

4. Group according to any one of the preceding claims, wherein said conveyance circuit (4) departs starting from said at least one tank (2), passes through said filter (3) and opens into said at least one tank (2) or into a storage container, such that a circuit is attained in which the water absorbs a color from said at least one natural dye substance (FS) contained in said at least one filter (3).

5. Group according to claim 4, wherein said conveyance circuit (4) is a closed circuit that departs from said tank (2) and also returns or ends in said tank (2) by means of a terminal duct (4c) of said conveyance circuit (4).

6. Group according to any one of the preceding claims, wherein said at least one natural dye substance (FS) comprises roots, berries, fruits, shells and/or barks or in general parts of flowers or plants or animals or mushrooms or parts of mushrooms or minerals or any other natural substance that releases color.

7. Group according to any one of the preceding claims, wherein said at least one natural dye substance (FS) is in the form of scales, pieces or powder.

8. Group according to any one of the preceding claims, wherein said at least one filter (3) has longitudinal symmetry axis (x-x) tilted with respect to the vertical or vertical, wherein said at least one filter (3) is arranged with an inlet end or opening (3b) at a level higher than the respective outlet end or opening (3c), such that the water traverses said at least one filter (3) from top to bottom.

9. Group according to any one of the preceding claims, comprising at least one duct (5a, 5b) for the discharge or outflow of the water treated or dyed in said at least one filter (3) towards a dyeing machine.

10. Group according to claim 9, wherein said at least one discharge duct (5a, 5b) constitutes a branching arm of said conveyance circuit (4) intercepted by a respective shut-off valve (7a, 7c).

11. Group according to any one of the preceding claims, comprising two or more ducts (5a, 5b) for the discharge or outflow of the water treated or dyed in said at least one filter (3), each towards a respective washing machine or dyeing machine.

12. Group according to any one of the preceding claims, comprising a bypass or connection tube (4e) between said filter (3) and said tank (2) or a storage tank or the conveyance circuit (4), said tube being set to allow completely filling the filter with water, facilitating the venting of excess air from the filter (3) to the tank (2) or to the storage tank or to the conveyance circuit (4).

13. Group according to any one of the preceding claims, comprising a colorimeter or sensor for detecting the color in the water treated in the filter (3), and such detection sensor is set to control the level of color absorbed by the water in the filter and to consequently inform an electronic control unit of the group.

14. Plant for dyeing manufactured items, such as clothing articles, comprising a group according to any one of the preceding claims as well as at least one apparatus or washing machine or dyeing machine for dyeing manufactured items, such as clothing articles, which is in fluid communication with said at least one tank (2) or with a storage container or with said at least one filter (3) so as to receive from the same said compound for dyeing manufactured items.

15. Method for preparing a compound for dyeing manufactured items with a group according to any one of claims 1 to 13, which provides for conveying said water within said at least one filter (3) and through said at least one natural dye substance (FS) such that said water absorbs a color from said at least one natural dye substance (FS) contained in said at least one filter (3).

16. Method according to claim 15, comprising a step for heating the water, if desired at a temperature between 40 and 98°C, for example for a time between 5' and 120', by heating means, before or during the conveyance of the water into said at least one filter (3), so as to increase the absorption action by the water of the color released by said at least one natural dye substance (FS).

17. Method for treatment with a plant according to claim 14, wherein after having conveyed in accordance with claim 15 or 16 the water within said at least one filter (3) and through said at least one natural dye substance (FS), the following steps are executed:
- sending said filtered water again within said tank (2) or sending it to a storage container after a specific period;
- transmitting the compound for dyeing in said at least one washing machine or dyeing machine, where the compound will dye the manufactured items, such as for example clothing articles.

## Patentansprüche

1. Gruppe zur Herstellung einer Verbindung zum Färben von gefertigten Artikeln, wie zum Beispiel Kleidungsstücken, umfassend mindestens einen Tank (2) zur Aufnahme von Wasser, mindestens einen Filter (3), der ein Aufnahmemittel enthält, das dazu ausgelegt ist, ein Farbabgabeelement zu enthalten, das mindestens eine natürliche Farbsubstanz (FS) in Fluidverbindung mit dem besagten mindestens einen Tank (2) umfasst, so dass das besagte Wasser in dem besagten mindestens einen Tank (2) in den oder durch den besagten mindestens einen Filter (3) und durch die besagte mindestens eine natürliche Farbsubstanz (FS) in einer Weise befördert werden kann, dass das besagte Wasser durch die besagte mindestens eine natürliche Farbsubstanz (FS) gefärbt wird,
wobei die besagte Vorrichtung mindestens einen Kreislauf (4) zum Fördern des aus dem besagten mindestens einen Tank (2) entnommenen Wassers in den besagten mindestens einen Filter (3) und durch die besagte mindestens eine natürliche Farbsubstanz (FS) umfasst,
wobei die besagte Vorrichtung ferner Heizmittel umfasst, die in dem besagten mindestens einen Tank (2) um den oder in dem besagten Förderkreislauf (4) und/oder um den oder in dem besagten mindestens einen Filter (3) angebracht sind oder in jedem Fall darin wirken, um das Wasser, bevor dieses dem besagten mindestens einen Filter (3) zugeführt wird, oder während einer solchen Zuführung zu erhitzen, um die Absorption durch das Wasser von Farbe, die von der besagten mindestens einen natürlichen Farbsubstanz (FS) freigesetzt wird, während der Filterwirkung oder des Durchtritts des Wassers durch die natürliche Farbsubstanz (FS) zu erleichtern.

2. Gruppe nach Anspruch 1, worin die besagten Heizmittel so eingestellt sind, dass sie das Wasser auf eine Temperatur zwischen 40 und 98 °C erhitzen.

3. Gruppe nach Anspruch 1 oder 2, worin die besagten Heizmittel eine Spule oder einen elektrischen Widerstand umfassen.

4. Gruppe nach irgendeinem der vorangegangenen Ansprüche, worin der besagte Förderkreislauf (4) von dem besagten mindestens einen Tank (2) ausgeht, den besagten Filter (3) durchläuft und in den besagten mindestens einen Tank (2) oder in einen Speicherbehälter mündet, so dass ein Kreislauf erreicht wird, in dem das Wasser eine Farbe aus der besagten mindestens einen natürlichen Farbsubstanz (FS), die in dem besagten mindestens einen Filter (3) enthalten ist, absorbiert.

5. Gruppe nach Anspruch 4, worin der besagte Förderkreislauf (4) ein geschlossener Kreislauf ist, der von dem besagten Tank (2) ausgeht und mittels eines Endkanals (4c) des besagten Förderkreislaufs (4) auch in den besagten Tank (2) zurückkehrt oder in diesem endet.

6. Gruppe nach irgendeinem der vorangegangenen Ansprüche, worin die besagte mindestens eine natürliche Farbsubstanz (FS) Wurzeln, Beeren, Früchte, Schalen und/oder Rinden oder im Allgemeinen Teile von Blumen oder Pflanzen oder Tieren oder Pilze oder Teile von Pilzen oder Mineralien oder jede andere natürliche Substanz, die Farbe freisetzt, umfasst.

7. Gruppe nach irgendeinem der vorangegangenen Ansprüche, worin die besagte mindestens eine natürliche Farbsubstanz (FS) in Form von Schuppen, Stücken oder Pulver vorliegt.

8. Gruppe nach irgendeinem der vorangegangenen Ansprüche, worin der besagte mindestens eine Filter (3) eine Längssymmetrieachse (x-x) aufweist, die in Bezug auf die Senkrechte geneigt ist oder vertikal ist, worin der besagte mindestens eine Filter (3) mit einem Einlassende oder einer Einlassöffnung (3b) auf einer höheren Ebene als das jeweilige Auslassende oder die jeweilige Auslassöffnung (3c) angeordnet ist, so dass das Wasser den besagten mindestens einen Filter (3) von oben nach unten durchläuft.

9. Gruppe nach irgendeinem der vorangegangenen Ansprüche, umfassend mindestens einen Kanal (5a, 5b) für den Ablauf oder den Abfluss des in dem mindestens einen Filter (3) behandelten oder gefärbten Wassers zu einer Färbemaschine hin.

10. Gruppe nach Anspruch 9, worin der besagte mindestens eine Ablaufkanal (5a, 5b) einen Verzweigungsarm des besagten Förderkreislaufs (4) bildet, der von einem jeweiligen Absperrventil (7a, 7c) unterbrochen wird.

11. Gruppe nach irgendeinem der vorangegangenen Ansprüche, umfassend zwei oder mehr Kanäle (5a, 5b) für den Ablauf oder den Abfluss des in dem besagten mindestens einen Filter (3) behandelten oder gefärbten Wassers, die jeweils zu einer jeweiligen Waschmaschine oder Färbemaschine hin führen.

12. Gruppe nach irgendeinem der vorangegangenen Ansprüche, umfassend ein Bypass- oder Verbindungsrohr (4e) zwischen dem besagten Filter (3) und dem besagten Tank (2) oder einem Speichertank oder dem Förderkreislauf (4) umfasst, wobei das besagte Rohr so eingestellt ist, dass es eine vollständige Füllung des Filters mit Wasser ermöglicht, was die Entlüftung von überschüssiger Luft aus dem Filter (3) zum Tank (2) oder zum Speichertank oder zum Förderkreislauf (4) erleichtert.

13. Gruppe nach irgendeinem der vorangegangenen Ansprüche, umfassend ein Farbmessgerät oder einen Sensor zum Erfassen der Farbe in dem im Filter (3) behandelten Wasser, und ein derartiger Erfassungssensor eingestellt ist, um das Niveau der vom Wasser im Filter absorbierten Farbe zu kontrollieren und demzufolge eine elektronische Steuereinheit der Gruppe zu informieren.

14. Anlage zum Färben von gefertigten Artikeln, wie zum Beispiel Kleidungsstücken, umfassend eine Gruppe nach irgendeinem der vorangegangenen Ansprüche sowie mindestens eine Vorrichtung oder Waschmaschine oder Färbemaschine zum Färben von gefertigten Artikeln, wie zum Beispiel Kleidungsstücken, die in Fluidverbindung mit dem besagten mindestens einen Tank (2) oder mit einem Speicherbehälter oder mit dem besagten mindestens einen Filter (3) steht, um davon die besagte Verbindung zum Färben von gefertigten Artikeln zu erhalten.

15. Verfahren zur Herstellung einer Verbindung zum Färben von gefertigten Artikeln mit einer Gruppe nach einem der Ansprüche 1 bis 13, das das Fördern des besagten Wasser in den besagten mindesten einen Filter (3) und durch die besagte mindestens eine natürliche Farbsubstanz (FS) vorsieht, so dass das besagte Wasser eine Farbe aus der besagten mindestens einen natürlichen Farbsubstanz (FS), die in dem besagten mindestens einen Filter (3) enthalten ist, absorbiert.

16. Verfahren nach Anspruch 15, umfassend einen Schritt zum Heizen des Wassers, falls gewünscht bei einer Temperatur zwischen 40 und 98 °C, zum Beispiel für eine Zeit zwischen 5' und 120', durch Heizmittel, vor oder während der Förderung des Wassers in den besagten mindestens einen Filter (3), um die Absorptionswirkung der von der besagten mindestens einen natürlichen Farbsubstanz (FS) freigesetzten Farbe durch das Wasser zu erhöhen.

17. Verfahren zur Behandlung mit einer Anlage nach Anspruch 14, worin nach dem Fördern des Wassers nach Anspruch 15 oder 16 in den besagten mindestens einen Filter (3) und durch die besagte mindestens eine natürliche Farbsubstanz (FS) die folgenden Schritte ausgeführt werden:
- Leiten des besagten gefilterten Wassers wieder in den besagten Tank (2) oder sein Leiten zu einem Speicherbehälter nach einem bestimmten Zeitraum;
- Weiterleiten der Verbindung zum Färben in die besagte mindestens eine Waschmaschine oder Färbemaschine, wo die Verbindung die gefertigten Artikel, wie zum Beispiel Kleidungsstücke, färbt.

## Revendications

1. Groupe de préparation d'un composé pour teinture d'articles manufacturés, tels que par exemple des articles d'habillement, comprenant au moins un réservoir (2) pour contenir de l'eau, au moins un filtre (3) comprenant un moyen de confinement adapté pour contenir un élément de dégagement de couleur comprenant au moins une substance colorante naturelle (FS) en communication fluide avec ledit au moins un réservoir (2) tel que ladite eau dans ledit au moins un réservoir (2) puisse être transportée à l'intérieur ou à travers ledit au moins un filtre (3) et à travers ladite au moins une substance colorante naturelle (FS) de telle sorte que ladite eau soit teintée par ladite au moins une substance colorante naturelle (FS),
ledit appareil comprenant au moins un circuit (4) pour transporter ladite eau, puisée dans ledit au moins un réservoir (2), dans ledit au moins un filtre (3) et à travers ladite au moins une substance colorante naturelle (FS),
ledit appareil comprenant en outre des moyens de chauffage montés ou en tout cas fonctionnant dans ledit au moins un réservoir (2) autour ou à l'intérieur dudit circuit de transport (4) et/ou autour ou à l'intérieur dudit au moins un filtre (3) afin de chauffer l'eau avant que celle-ci ne soit introduite dans ledit au moins un filtre (3) ou pendant cette alimentation afin de faciliter l'absorption par l'eau de couleur dégagée par ladite au moins une substance colorante naturelle (FS) pendant l'action filtrante ou le passage de l'eau à travers la substance colorante naturelle (FS).

2. Groupe selon la revendication 1, dans lequel lesdits moyens de chauffage sont réglés pour chauffer ladite eau à une température comprise entre 40 et 98°C.

3. Groupe selon la revendication 1 ou 2, dans lequel lesdits moyens de chauffage comprennent une bobine ou une résistance électrique.

4. Groupe selon l'une quelconque des revendications précédentes, dans lequel ledit circuit de transport (4) part dudit au moins un réservoir (2), traverse ledit filtre (3) et s'ouvre dans ledit au moins un réservoir (2) ou dans un récipient de stockage, de telle sorte qu'un circuit est atteint dans lequel l'eau absorbe une couleur provenant de ladite au moins une substance colorante naturelle (FS) contenue dans ledit au moins un filtre (3).

5. Groupe selon la revendication 4, dans lequel ledit circuit de transport (4) est un circuit fermé qui part dudit réservoir (2) et retourne ou se termine également dans ledit réservoir (2) au moyen d'un conduit terminal (4c) dudit circuit de transport (4).

6. Groupe selon l'une quelconque des revendications précédentes, dans lequel ladite au moins une substance colorante naturelle (FS) comprend des racines, des baies, des fruits, des coquilles et/ou des écorces ou en général des parties de fleurs ou de plantes ou d'animaux ou de champignons ou de parties de champignons ou de minéraux ou toute autre substance naturelle qui libère de la couleur.

7. Groupe selon l'une quelconque des revendications précédentes, dans lequel ladite au moins une substance colorante naturelle (FS) se présente sous forme d'écailles, de morceaux ou de poudre.

8. Groupe selon l'une quelconque des revendications précédentes, dans lequel ledit au moins un filtre (3) présente un axe de symétrie longitudinale (x-x) incliné par rapport à la verticale ou vertical, dans lequel ledit au moins un filtre (3) est disposé avec une extrémité ou une ouverture d'entrée (3b) à un niveau supérieur à l'extrémité ou à l'ouverture de sortie respective (3c), tel que l'eau traverse ledit au moins un filtre (3) de haut en bas.

9. Groupe selon l'une quelconque des revendications précédentes, comprenant au moins un conduit (5a, 5b) pour l'évacuation ou la sortie de l'eau traitée ou teintée dans ledit au moins un filtre (3) vers une machine de teinture.

10. Groupe selon la revendication 9, dans lequel ledit au moins un conduit de décharge (5a, 5b) constitue un bras ramifié dudit circuit de transport (4) intercepté par une vanne d'arrêt respective (7a, 7c).

11. Groupe selon l'une quelconque des revendications précédentes, comprenant deux ou plusieurs conduits (5a, 5b) pour l'évacuation ou la sortie de l'eau traitée ou teinte dans ledit au moins un filtre (3), chacun vers une machine à laver ou de teinture respective.

12. Groupe selon l'une quelconque des revendications précédentes, comprenant un tube de dérivation ou de raccordement (4e) entre ledit filtre (3) et ledit réservoir (2) ou un réservoir de stockage ou le circuit de transport (4), ledit tube étant réglé de manière à permettre le remplissage complet du filtre avec de l'eau, facilitant l'évacuation de l'excès d'air du filtre (3) vers le réservoir (2) ou vers le réservoir de stockage ou vers le circuit de transport (4).

13. Groupe selon l'une quelconque des revendications précédentes, comprenant un colorimètre ou un capteur pour détecter la couleur de l'eau traitée dans le filtre (3), ce capteur de détection étant réglé pour contrôler le niveau de couleur absorbé par l'eau dans le filtre et pour informer par conséquent une unité de commande électronique du groupe.

14. Installation de teinture d'articles manufacturés, tels que des articles d'habillement, comprenant un groupe selon l'une quelconque des revendications précédentes ainsi qu'au moins un appareil ou machine à laver ou machine de teinture pour teindre des articles manufacturés, tels que des articles d'habillement, en communication fluide avec ledit au moins un réservoir (2) ou avec un récipient de stockage ou avec ledit au moins un filtre (3) de manière à en recevoir ledit composé pour la teinture d'articles manufacturés.

15. Procédé de préparation d'un composé de teinture d'articles manufacturés avec un groupe selon l'une quelconque des revendications 1 à 13, qui prévoit le transport de ladite eau à l'intérieur dudit au moins un filtre (3) et à travers ladite au moins une substance colorante naturelle (FS) de telle manière que ladite eau absorbe une couleur de ladite au moins une substance colorante naturelle (FS) contenue dans ledit au moins un filtre (3).

16. Procédé selon la revendication 15, comprenant une étape de chauffage de l'eau, si désiré à une température comprise entre 40 et 98°C, par exemple pendant un temps compris entre 5' et 120', par des moyens de chauffage, avant ou pendant le transport de l'eau dans ledit au moins un filtre (3), de manière à augmenter l'action d'absorption par l'eau de la couleur libérée par ladite au moins une substance colorante naturelle (FS).

17. Procédé de traitement avec une installation selon la revendication 14, dans lequel, après avoir transporté conformément à la revendication 15 ou 16 l'eau à l'intérieur dudit au moins un filtre (3) et à travers ladite au moins une substance colorante naturelle (FS), les étapes suivantes sont exécutées :
- renvoi de ladite eau filtrée dans ledit réservoir (2) ou envoi de celle-ci dans un conteneur de stockage après une période déterminée ;
- transmission du composé de teinture dans ladite au moins une machine à laver ou machine de teinture, où le composé va teindre les articles manufacturés, comme par exemple des articles d'habillement.
